# EUROPÄISCHE PATENTANMELDUNG

(11) **EP 4 459 801 A1**
(43) Veröffentlichungstag der Anmeldung: **06.11.2024**
(21) Anmeldenummer: 23216358.4
(22) Anmeldetag: 13.12.2023
(51) Int. Cl.: H01R 13/00, B60S 1/00, F16L 1/00, H01R 13/52, H01R 13/74

(54) **GEHÄUSETEIL FÜR EINEN HYBRIDVERBINDER**

(30) Priorität: 04.05.2023 DE 102023111650
(71) Anmelder: TE Connectivity Solutions GmbH, 8200 Schaffhausen (CH)
(72) Erfinder: GIMBEL, Markus, 8200 Schaffhausen (CH); WIENZIERS, Ronald, 8200 Schaffhausen (CH); SCHNEIDER, Joachim, 8200 Schaffhausen (CH)
(74) Vertreter: Grünecker Patent- und Rechtsanwälte PartG mbB

(57) **Zusammenfassung**

Gezeigt ist ein Gehäuseteil (20) für einen Hybridverbinder (100) zur Übertragung von elektrischem Strom und mindestens einem Fluid auf einen Gegenverbinder (200) entlang einer Verbindungsrichtung (V), umfassend einen Elektroverbindungsbereich (21) und einen vom Elektroverbindungsbereich (21) getrennten Fluidverbindungsbereich (24), der einen an einem distalen Ende (39) gelegenen externen Anschluss (49) mit wenigstens einem Fluidkanal (40) zum Anschließen von wenigstens einem Fluidschlauch (50) quer zur Verbindungsrichtung (V) aufweist.

## Beschreibung

Die Erfindung betrifft ein Gehäuseteil für einen Hybridverbinder zur Übertragung von elektrischem Strom und mindestens einem Fluid, insbesondere einem Fluid oder mehreren Fluiden, auf einen Gegenverbinder entlang einer Verbindungsrichtung.

Solche Verbinder sind bekannt und umfassen oft einen Elektroverbindungsbereich und einen vom Elektroverbindungsbereich getrennten Fluidverbindungsbereich.

Aufgabe der Erfindung ist es, einen Hybridverbinder bereitzustellen, der in Bereichen eingesetzt werden kann, in denen die bisher bekannten Versionen nicht oder schlecht implementiert werden können.

Erfindungsgemäß wird dies dadurch erreicht, dass ein an einem distalen Ende gelegener externer Anschluss von wenigstens einem Fluidkanal, insbesondere einem Fluidkanal oder mehreren Fluidkanälen, zum Anschließen wenigstens eines Fluidschlauchs quer zur Verbindungsrichtung ausgestaltet ist.

Diese Lösung hat den Vorteil, dass der wenigstens eine angeschlossene Fluidschlauch automatisch seitlich von der Verbindungsrichtung absteht und durch den dadurch vom wenigstens einen Fluidschlauch gebildeten Bogen eine Beweglichkeit des Hybridsteckers relativ zu einem weiteren Element entlang der Verbindungsrichtung garantiert ist. Dadurch ermöglicht ein solcher Hybridstecker die Übertragung des wenigstens einen Fluides zwischen Elementen mit variablem Abstand, zum Beispiel die Übertragung von Wischwasser für eine Kamera oder einen Spiegel von einer Karosserie auf eine Fahrzeugtür und/oder Luft.

Die erfindungsgemäße Lösung kann mit den folgenden, jeweils für sich vorteilhaften und beliebig miteinander kombinierbaren Weiterentwicklungen und Ausgestaltungen weiter verbessert werden.

In einer vorteilhaften Ausgestaltung ist das Gehäuseteil dazu ausgestaltet, dass im verbundenen Zustand der Elektroverbindungsbereich fluiddicht abgedichtet ist. Der Ausdruck "Fluid" bezeichnet allgemein ein Gas oder eine Flüssigkeit. Insbesondere die Dichtigkeit gegenüber Flüssigkeiten ist wichtig, um einen Kurzschluss zu verhindern. Der Elektroverbindungsbereich kann nach außen hin und/oder gegenüber dem Fluidverbindungsbereich fluiddicht abgedichtet sein.

Um eine gute Abdichtung und/oder Abschirmung zu ermöglichen, kann ein Kragen ein Kontaktfeld des Hybridverbinders umgeben. Dabei kann ein Anschluss des Fluidverbindungsbereichs außerhalb des Kontaktfeldes liegen.

Eine Ausgestaltung, die ein Anschließen des wenigstens einen Fluidschlauchs quer zur Verbindungsrichtung ermöglicht, kann darin bestehen, dass eine Achse eines im Wesentlichen rohrförmigen externen Anschlusses in der beabsichtigten Richtung quer zur Verbindungrichtung verläuft. Der externe Anschluss kann in der beabsichtigten Richtung offen und in anderen Richtungen geschlossen sein.

In einer vorteilhaften Ausgestaltung ist der externe Anschluss zum Anschließen des wenigstens einen Fluidschlauchs senkrecht zur Verbindungsrichtung ausgestaltet. In diesem Fall kann eine besonders große Flexibilität erreicht werden.

In einer Ausgestaltung, die eine einfache Fertigung mithilfe eines Spritzgießverfahrens erlaubt, umfasst der wenigstens eine Fluidkanal jeweils zwei Segmente mit zylindrischen Innenformen. Eine solche Ausgestaltung erlaubt insbesondere eine einfache Entformung. Die Segmente können dabei quer zueinander verlaufen und einen Winkel einschließen. "Zylindrisch" bedeutet hier insbesondere allgemein eine Form mit einem entlang einer Richtung gleichbleibenden Querschnitt, wobei der Querschnitt nicht unbedingt kreisförmig oder ellipsenförmig sein muss, sondern auch andere Formen aufweisen kann, etwa teilweise oder komplett polygonal oder eine beliebige Form.

Der Verlauf des wenigstens einen Fluidkanals kann so sein, dass jeweils lediglich zwei gerade Abschnitte vorhanden sind. Jeder der Abschnitte kann eines der Segmente mit einer zylindrischen Innenform umfassen. Einer der Abschnitte kann entlang der Verbindungsrichtung verlaufen. Der andere Abschnitt kann quer zur Verbindungsrichtung verlaufen. Zwischen den beiden Abschnitten kann eine Ecke vorhanden sein, in der die beiden Abschnitte zusammenlaufen.

In einer alternativen Ausgestaltung kann wenigstens ein Fluidkanal, insbesondere ein oder mehrere Fluidkanäle, zumindest abschnittsweise einen gekrümmten Abschnitt aufweisen. Der Abschnitt kann als eine Kurve oder ein Bogen mit einem konstanten oder sich verändernden Krümmungsradius ausgestaltet sein.

Vorzugsweise weist wenigstens ein Fluidkanal einen gleichbleibenden Querschnitt oder zumindest eine gleich groß bleibende Querschnittsfläche auf. Dadurch kann die Entstehung von Druckunterschieden geringgehalten werden.

In einer alternativen Ausgestaltung kann sich der Querschnitt, insbesondere die Querschnittfläche ändern. Beispielsweise kann sich der Querschnitt in Richtung nach außen hin erweitern, sodass der wenigstens eine Fluidkanal eine konische Innenform aufweist. Dies kann etwa dazu genutzt werden, um den Druck des jeweiligen Fluides zu verändern. So kann es etwa gewünscht sein, dass sich der Druck aufgrund der Geometrie des Fluidkanals vergrößert, um das Fluid mit höherem Druck applizieren zu können. In einer Ausgestaltung mit zwei zylindrischen Innenformen können diese verschiedene Querschnittsflächen aufweisen.

Eine einfache Fertigung ist möglich, wenn der wenigstens eine Fluidkanal, vorzugsweise ein oder mehrere Fluidkanäle, einteilig mit dem Rest des Gehäuseteils ist.

In einer alternativen Ausgestaltung kann wenigstens ein Fluidkanal, insbesondere ein oder mehrere Fluidkanäle, jedoch auch ein separates Teil sein, das mit dem Rest des Gehäuseteils verbunden wird. Insbesondere können in einer vorteilhaften Ausgestaltung wenigstens ein oder mehrere Fluidkanäle entkoppelt und als separates Teil ausgestaltet sein. Dies kann beispielsweise vorteilhaft sein, wenn der wenigstens eine Fluidkanal aus einem anderen Material gefertigt wird oder eine schwierig zu fertigende Form aufweist.

In dieser Ausgestaltung kann das separate Teil am proximalen Ende Rastelemente aufweisen, die mit Vorsprüngen im Gehäuseteil, insbesondere im Kragen, entgegen der Steckrichtung verrasten.

Für eine einfache Verbindung mit einem Gegenverbinder kann ein an einem proximalen Ende gelegener interner Anschluss zur Verbindung parallel zur Verbindungsrichtung ausgestaltet sein.

Die Richtungen an dem internen Anschluss und dem externen Anschluss können quer zueinander, insbesondere 90 Grad zueinander verlaufen.

Um die Zuverlässigkeit der Dichtwirkung zu erhöhen, kann eine separate Dichtung den internen Anschluss umgeben.

Für einen Toleranzausgleich kann sich der innere lichte Querschnitt des wenigstens einen Fluidkanals in einem Endabschnitt zum proximalen Ende hin erweitern. Alternativ kann eine solche Ausgestaltung zur sicheren Verbindung mit einem außen kegelförmigen Gegenelement genutzt werden. Der äußere Querschnitt kann dabei gleichbleiben.

Eine weitere Ausgestaltung kann ebenso vorsehen, dass sich der innere lichte Querschnitt von wenigstens einem oder mehreren Fluidkanälen verjüngt um eine Verbindung mit einem komplementären Gegenelement des Gegenverbinders zu ermöglichen.

Der Gegenverbinder kann weiterhin so ausgestaltet sein, dass er in Steckrichtung Kupplungselemente aufweist, um mit einer Kupplung verbunden zu werden. Dies ermöglicht eine einfache Erweiterung des wenigstens einen Fluidkanals sowie einen modularen Einsatz des Hybridverbinders.

Um die Anbringung einer Tülle, die die Kabel und den wenigstens einen Fluidschlauch schützend umgibt, zu ermöglichen, kann das Gehäuseteil einen Tüllenbefestigungsabschnitt zur Befestigung einer Tülle aufweisen. Die Tülle kann elektrische Kabel und den wenigstens einen Fluidschlauch aufnehmen. Sie kann eine Schlauch- oder Rohrform aufweisen, aber aus einem flexiblen Material gefertigt sein, wie etwa Gummi oder Silikon. Sie kann mindestens einen Balg aufweisen, um die Flexibilität zu erhöhen.

Der Tüllenbefestigungsabschnitt kann dazu ausgestaltet sein, dass das am Verbinder befestigte Ende der Tülle quer, insbesondere senkrecht zur Verbindungsrichtung vom Verbinder weg verläuft. Insbesondere kann er so ausgestaltet sein, dass die Tülle entlang einer Richtung vom Verbinder weg läuft, die parallel zu einer Richtung ist, entlang der der wenigstens eine Fluidschlauch und/oder die elektrischen Kabel vom Verbinder weg verlaufen.

Ein erfindungsgemäßer Verbinder umfassend ein erfindungsgemäßes Gehäuseteil kann darüber hinaus noch weitere Elemente umfassen, insbesondere elektrische Kontaktelemente und/oder Dichtelemente.

Um eine sichere Verbindung zu ermöglichen, kann der Verbinder einen Schieber zum Sichern des Verbinders an dem Gegenverbinder aufweisen.

Alternativ oder zusätzlich kann der Verbinder einen Hebelmechanismus aufweisen, der die Verbindung sichert und/oder eine Verbindungskraft erhöht. Der Hebel kann so ausgestaltet sein, dass er ein Sicherungselement in das Gehäuseteil schiebt, um den Hybridstecker in der Steckposition zu sichern.

Das Gehäuseteil und/oder der Verbinder können dazu ausgestaltet sein, dass im vorgesehenen Betriebszustand der Fluidverbindungsbereich bezüglich der Schwerkraft komplett unterhalb des Elektroverbindungsbereichs liegt. Als vorgesehener Betriebszustand kann insbesondere ein angebrachter Zustand verstanden werden. Dabei ist der Hybridverbinder z. B. mit einem passenden Gegenverbinder verbunden und an der Karosserie angebracht, wobei das Fahrzeug in einer üblichen horizontalen Stellung ist. Dadurch kann verhindert werden, dass beim Verbinden oder Trennen des Verbinders das wenigstens eine Fluid in den Elektroverbindungsbereich kommen und dort einen Kurzschluss oder andere Schäden verursachen kann.

Dies kann beispielsweise dadurch erzielt werden, dass der Fluidverbindungsbereich komplett in einem ersten, von einer Ebene definierten Halbraum liegt und der Elektroverbindungsbereich komplett in einem zweiten, zum ersten Halbraum komplementären Halbraum liegt. Der zweite Halbraum, der wieder durch die Ebene definiert ist, ist vorzugsweise disjunkt zum ersten Halbraum, d.h., dass die beiden Halbräume keinen gemeinsamen Raumbereich aufweisen. Im vorgesehenen Betriebszustand verläuft die Ebene dann senkrecht zur Richtung der Schwerkraft und parallel zu einer Tangentialebene Kugeloberfläche der Erde.

In einer vorteilhaften Ausgestaltung ist die Ebene parallel zur Verbindungsrichtung.

Der Verbinder kann insbesondere als ein Stecker ausgestaltet sein. Der Stecker kann Steckelemente oder Buchsenelemente für den Strom und/oder von wenigstens einem Fluid aufweisen. Die Verbindungsrichtung kann in diesem Fall eine Steckrichtung sein.

Gemäß einer vorteilhaften Ausgestaltung ist eine Dichtung zum Abdichten des Fluidverbindungsbereichs einteilig mit einer Dichtung zum Abdichten des Elektroverbindungsbereichs. Dies kann den Fertigungsaufwand minimieren. Die Dichtung zum Abdichten des Fluidverbindungsbereichs und die Dichtung zum Abdichten des Elektroverbindungsbereichs können Teile und/oder Abschnitte einer einzigen Dichtung sein. Um die Betriebssicherheit zu erhöhen, kann der Verbinder dazu ausgestaltet sein, dass die Verbindung des internen Anschlusses mit einem Gegenelement im verbundenen Zustand durch wenigstens zwei voneinander unabhängige Dichtungen oder Dichtsysteme gegenüber dem Elektroverbindungsbereich abgedichtet ist. Dichtungen können insbesondere flexible und/oder komprimierbare Materialien umfassen, etwa Gummi oder Silikone. Eine Dichtung kann beispielsweise auch ein O-Ring sein.

Für die Verwendung im Automobilbereich, speziell für die Verwendung an einem Blech, ist es vorteilhaft, wenn der Verbinder dazu ausgestaltet ist, mit einem an einer Fläche, vorzugsweise einer ebenen Fläche, angebrachten Gegenverbinder verbunden zu werden. Als Fläche kann beispielsweise die Oberfläche des Blechs betrachtet werden. Teile des Verbinders und/oder des Gegenverbinders können zumindest im verbundenen Zustand durch ein Loch in der Fläche ragen, etwa Kontaktelemente. Der Gegenverbinder kann zur Verbindung mit dem Blech Rastelemente aufweisen, um ein Herausziehen des Gegenverbinders in Steckrichtung zu verhindern. Bei einer solchen Ausgestaltung kann der an dem distalen Ende gelegene externe Anschluss des wenigstens einen Fluidkanals zum Anschließen des wenigstens einen Fluidschlauchs parallel zur Fläche ausgestaltet sein.

Vorzugsweise verläuft die Verbindungsrichtung bei einem solchen Verbinder senkrecht zur Fläche.

Im Folgenden wird die Erfindung anhand vorteilhafter Ausgestaltungen mit Bezug auf die Zeichnungen beispielhaft näher erläutert. Die dabei dargestellten vorteilhaften Weiterentwicklungen und Ausgestaltungen sind jeweils voneinander unabhängig und können beliebig miteinander kombiniert werden, je nachdem, wie dies im Anwendungsfall notwendig ist.

Es zeigen:

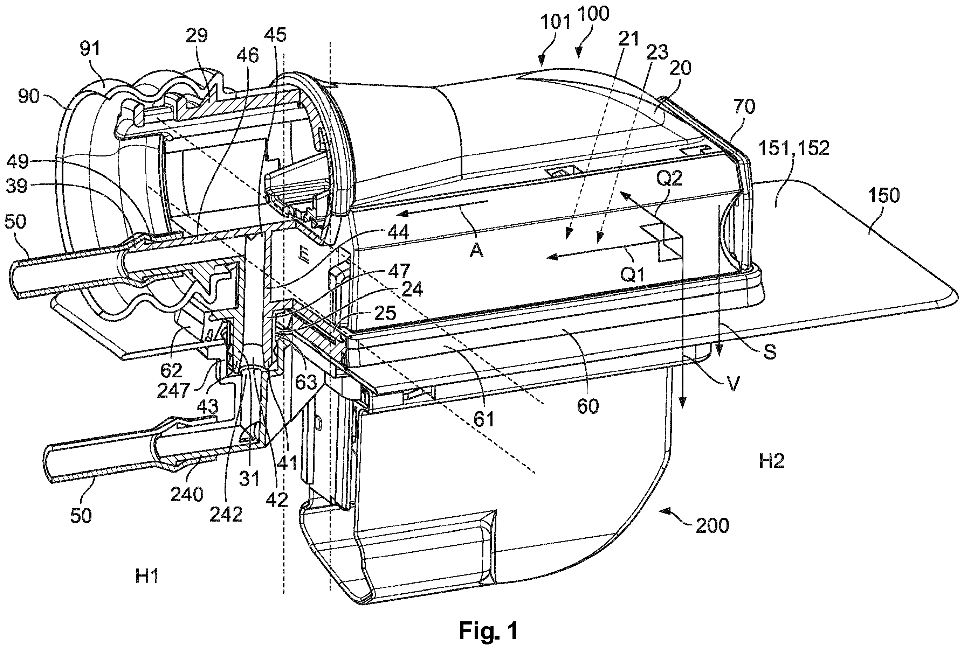

- Fig. 1: eine schematische, teilweise geschnittene Perspektivansicht einer Ausführungsform eines Hybridverbinders zusammen mit einem Gegenverbinder;
- Fig. 2: eine schematische Perspektivansicht eines Hybridverbinders im angebrachten Zustand;
- Fig. 3: eine schematische, teilweise geschnittene Perspektivansicht einer Ausführungsform eines Hybridverbinders mit Hebel;

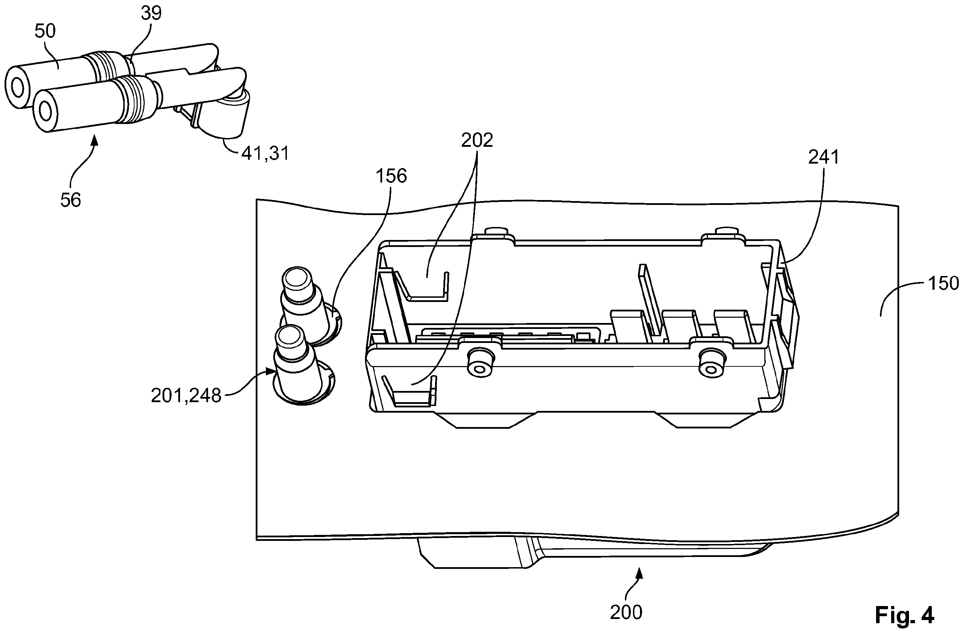

- Fig. 4: eine schematische Perspektivansicht des Gegenverbinders in einer Ausführungsform mit zwei Fluidkanälen; und

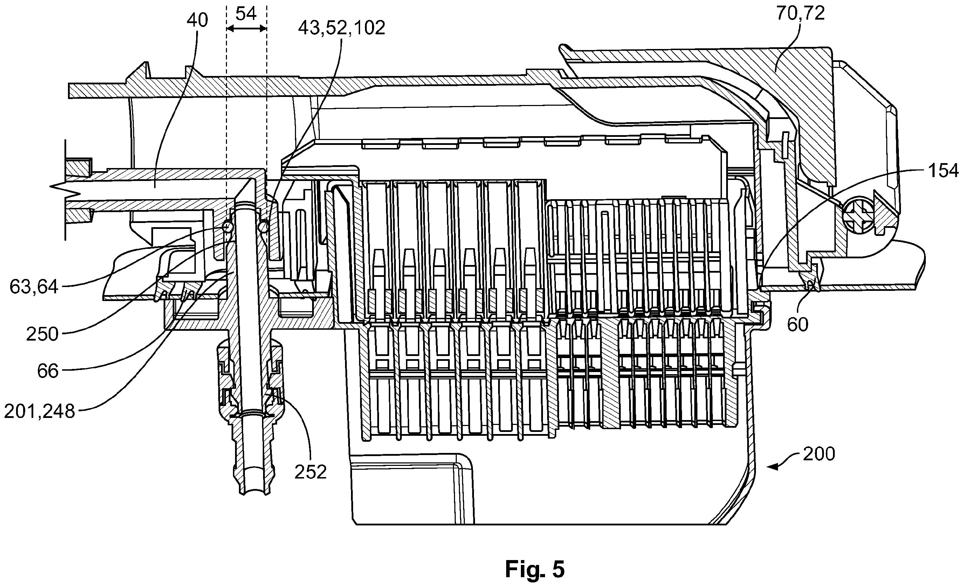

- Fig. 5: eine schematische geschnittene Perspektivansicht eines Hybridverbinders.

In den Figuren ist eine Ausführungsform eines Hybridverbinders 100 gezeigt. Der Hybridverbinder 100 ist mit einem passenden Gegenverbinder 200 verbunden, hier zusammengesteckt. Der Gegenverbinder 200 kann zum Beispiel an einem Blech 150 einer Tür 300 eines Fahrzeugs angebracht sein. In dem Blech 150 kann ein Loch vorhanden sein, durch das Teile des Gegenverbinders 200 oder des Hybridverbinders 100 ragen.

Der Hybridverbinder 100 dient nicht nur zur Übertragung von elektrischer Leistung oder elektrischen Signalen mittels Strom und/oder Spannung, sondern auch zur Versorgung eines Wischsystems mit Wischwasser und/oder Luft. Solche Wischsysteme für Spiegel oder Kameras können zum Beispiel für autonomes Fahren vorgeschrieben sein.

Der Hybridverbinder 100 umfasst insbesondere ein Gehäuseteil 20, das typischerweise aus einem Kunststoff spritzgegossen wird.

Das Gehäuseteil 20 umfasst einen Elektroverbindungsbereich 21, an dem nicht näher dargestellte Kontaktelemente zur Kontaktierung entsprechender Gegenelemente am Gegenverbinder 200 vorhanden sind. Die Kontaktelemente sind an nicht näher dargestellten Kabeln angebracht. Die elektrische Verbindung kann beispielsweise dazu genutzt werden, um elektrische Leistung und/oder Signale für das Wischsystem und/oder die Kamera zu übertragen.

Neben dem Elektroverbindungsbereich 21 verfügt das Gehäuseteil 20 über einen Fluidverbindungsbereich 24, der zur Übertragung von wenigstens einem Fluid ausgestaltet ist. In dem gezeigten Beispiel handelt es sich bei wenigstens einem Fluid um eine Flüssigkeit, nämlich um Wischwasser für das Wischsystem. Bei anderen Anwendungen kann wenigstens ein Fluid auch eine andere Flüssigkeit oder ein Gas sein.

Der Fluidverbindungsbereich 24 ist von dem Elektroverbindungsbereich 21 getrennt, um zu verhindern, dass austretendes Fluid zu einem Kurzschluss zwischen den Kontaktelementen führt oder die Kontaktelemente geschädigt werden, beispielsweise durch Korrosion.

Ein von den Kontaktelementen gebildetes Kontaktfeld 23 ist von einem Kragen 25 umgeben. An dem Kragen 25 ist eine Dichtung 60 angebracht, die in einem ersten Abschnitt 61 den Elektroverbindungsbereich 21 und in einem zweiten Abschnitt 62 den Fluidverbindungsbereich 24 umgibt. Durch die einteilige Ausgestaltung der Dichtung 60 ist der Fertigungsaufwand geringgehalten.

Das Gehäuseteil 20 ist so ausgestaltet, dass bei einer Verbindung des Hybridverbinders 100 mit dem Gegenverbinder 200 entlang einer Verbindungsrichtung V gleichzeitig eine elektrische Verbindung und wenigstens eine Fluidverbindung, insbesondere eine oder mehrere Fluidverbindungen, hergestellt wird.

Der Hybridverbinder 100 ist als ein Stecker 101 ausgestaltet, bei dem die Steckrichtung S der Verbindungsrichtung V entspricht. Der Hybridverbinder 100 und der Gegenverbinder 200 weisen hierfür jeweils aufeinander abgestimmte Elemente auf. Beispielsweise können die Kontaktelemente 102 am Hybridverbinder 100 als Steckelemente und die Kontaktelemente 201 am Gegenverbinder 200 als Buchsen ausgestaltet sein.

Entsprechend ist ein Endabschnitt 43 von wenigstens einem Fluidkanal 40 am Hybridverbinder 100 als Steckelement 47 ausgestaltet, das in eine Buchse 247 von wenigstens einem Fluidkanal 240 am Gegenverbinder 200 gesteckt wird. Zur genauen Positionierung bildet der Endabschnitt 43 einen innenliegenden Trichter 42, der mit einem umlaufenden, außen kegelförmigen Kragen 242 an der Buchse 247 zusammenwirkt. Zur Abdichtung zwischen dem Steckelement 47 und der Buchse 247 ist eine separate Dichtung 63 vorhanden. Der Fluidverbindungsbereich 24 ist also durch zwei separate Dichtungen 60, 63 vom Elektroverbindungsbereich 21 abgeschirmt.

In einer weiteren vorteilhaften Ausführungsform ist die Dichtung 63 als O-Ring 64 ausgestaltet und zwischen dem Endabschnitt 43 von wenigstens einem Fluidkanal 40 und des gegenüberliegenden Kontaktelements 201 angebracht. Das Kontaktelement 201 ist dabei als Steckelement 248 ausgestaltet mit einem innenliegenden Trichter 250, der sich entgegen der Steckrichtung S verjüngt. In dieser Ausgestaltung ist der Endabschnitt 43 als Buchse 52 ausgestaltet, die das Steckelement 248 umgibt und einen größeren Durchmesser 54 aufweist als das Steckelement 248. Zwischen dem Kragen 25 und dem Blech 150 weist der Hybridverbinder 100 eine Dichtung 66 auf, die den jeweiligen Endabschnitt 43 des wenigstens einen Fluidkanals 40, vorzugsweise der ein oder zwei Fluidkanäle 40, umgibt und den wenigstens einen Fluidkanal 40 gegenüber dem Elektroverbindungsbereich 21 abdichtet.

Der wenigstens eine Fluidkanal 40 verfügt über einen internen Anschluss 41 an einem proximalen Ende 31, der zur Verbindung mit den entsprechenden Elementen 201 am Gegenverbinder 200 dient. Ferner verfügt der wenigstens eine Fluidkanal 40 über einen externen Anschluss 49 an einem distalen Ende 39. Dort wird der wenigstens eine Fluidkanal 40 jeweils an einen Fluidschlauch 50 angeschlossen. Typischerweise wird ein Ende des wenigstens einen Fluidschlauches 50 über den externen Anschluss 49 geschoben und durch Vorsprünge gehalten.

Der Gegenverbinder 200 weist in einer vorteilhaften Ausführung in Steckrichtung S unterhalb des Blechs 150 Kupplungselemente 252 auf, die radial vom wenigstens einen Fluidkanal 240 des Gegenverbinders 200 abstehen. Die Kupplungselemente 252 sind so ausgestaltet, dass sie mit einer Kupplung 254 im Eingriff sein können, um einen geraden Abgang in Steckrichtung S des wenigstens einen Fluids zu ermöglichen und/oder um weitere Fluidkanäle anzuschließen.

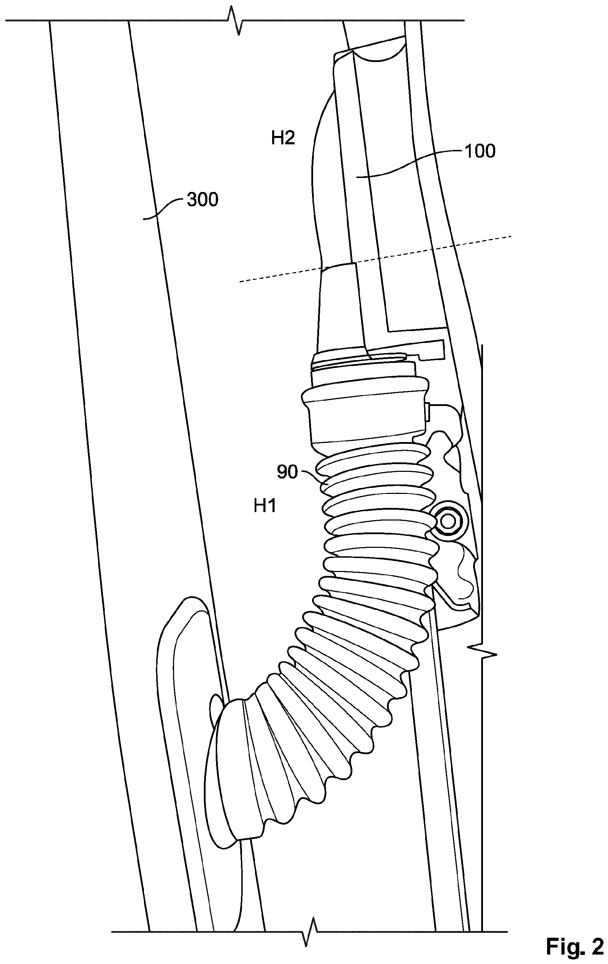

Der externe Anschluss 49 des wenigstens einen Fluidkanals 40 ist dabei so ausgestaltet, dass der wenigstens eine Fluidschlauch 50 quer zur Verbindungsrichtung V angeschlossen wird. Dies führt dazu, dass der wenigstens eine Fluidschlauch 50 in seinem weiteren Verlauf einen Bogen ausbildet, der eine Beweglichkeit des Steckers 100 entlang der Verbindungsrichtung V ermöglicht (siehe zum Beispiel Figur 2, die den angebrachten und damit den vorgesehenen Betriebszustand zeigt).

In dem gezeigten Beispiel ist eine Anschlussrichtung A des wenigstens einen Fluidschlauchs 50 senkrecht zur Verbindungsrichtung V und parallel zu einer ersten Querrichtung Q1. In anderen Ausgestaltungen kann auch ein Winkel, der von 90° abweicht, vorhanden sein. Ferner kann die Anschlussrichtung A auch Komponenten in einer zweiten Querrichtung Q2, die senkrecht zur ersten Querrichtung Q1 und senkrecht zur Verbindungsrichtung V verläuft, aufweisen.

Um das Gehäuseteil 20 beim Spritzgießen leicht entformen zu können, umfasst der wenigstens eine Fluidkanal 40 zwei Segmente 44, 46, die jeweils einen zylindrischen lichten Innenquerschnitt aufweisen. Dabei ist das erste Segment 44 über eine 90°-Ecke 45 mit dem zweiten Segment 46 verbunden. In anderen Ausgestaltungen können sich die inneren Querschnitte aber auch verändern, insbesondere nach außen hin vergrößem, um etwa eine leichtere Entformbarkeit zu ermöglichen. Ferner können die zwei Segmente 44, 46 verschiedene Querschnittsflächen aufweisen, wenn etwa der Druck im jeweiligen Fluid erhöht oder verringert werden soll.

Bei der dargestellten Ausführungsform ist der wenigstens eine Fluidkanal 40 einteilig mit dem Rest des Gehäuseteils 20. Insbesondere wenn der wenigstens eine Fluidkanal 40 schwierig zu formen ist, beispielsweise, weil er einen gekrümmten Verlauf aufweist, oder wenn er aus einem anderen Material bestehen soll, kann er auch als separates Teil gefertigt und später mit dem Rest des Gehäuseteils 20 verbunden werden. In einer vorteilhaften Ausgestaltung können beispielsweise zwei Fluidkanäle 40 als separates Teil 56 gefertigt und montierbar sein. Dabei können die Fluidkanäle 40 des separaten Teils 56 am proximalen Ende 31 über eine Materialbrücke 57 einteilig miteinander verbunden sein. Weiterhin weist das proximale Ende 31 in dieser Ausgestaltung flexible Rastelemente 58, beispielsweise Rastarme 59 auf, die sich in einem Winkel vom proximalen Ende 31 entgegen der Steckrichtung S nach oben und vom Außenumfang des jeweiligen Fluidkanals 40 radial weg erstrecken. Beim Einstecken des proximalen Endes 31 des separaten Teils 56 in Steckrichtung S werden die Rastelemente 58 an dem Vorsprung 26 des Kragens 25 arretiert, damit ein Lösen des separaten Teils 56 entgegen der Steckrichtung S verhindert wird.

Das Gehäuseteil 20 umfasst ferner einen Tüllenbefestigungsabschnitt 29, an dem eine Tülle 90 befestigt werden kann. Als Tülle 90 kann ein schlauch- oder rohrförmiges Element aus einem flexiblen Material verstanden werden, das zum Schutz der elektrischen Kabel und des wenigstens einen Fluidschlauches 50 dient. Der Tüllenbefestigungsabschnitt 29 ist dazu ausgestaltet, die Tülle 90 so zu befestigen, dass sie an ihrem Ende entlang der Anschlussrichtung A des wenigstens einen Fluidschlauchs 50 verläuft. Die Tülle 90 kann mindestens einen Balg 91 aufweisen, der eine leichte Biegeverformung ermöglicht.

Das Gehäuseteil 20 ist so ausgestaltet, dass im angebrachten Zustand der Fluidverbindungsbereich 24 komplett unterhalb des Elektroverbindungsbereichs 21 liegt. Dies wird dadurch erreicht, dass der Fluidverbindungsbereich 24, insbesondere der interne Anschluss 41, komplett in einem ersten Halbraum H1 und der Elektroverbindungsbereich 21 mit den Kontaktelementen komplett in einem zweiten Halbraum H2 liegt. Die beiden komplementären Halbräume H1, H2 werden durch eine Ebene E definiert und voneinander abgetrennt. Dadurch kann beim Anschließen oder Trennen das wenigstens eine Fluid nicht in den Elektroverbindungsbereich 21 vordringen, da es der Schwerkraft folgt und lediglich in den ersten Halbraum H1 tropfen kann.

Um eine Kontaktkraft aufzubringen, verfügt der Hybridverbinder 100 ferner über einen Schieber 70, der entlang der ersten Querrichtung Q1 gegenüber dem Gehäuseteil 20 verschieblich ist und dabei zum Beispiel eine Sicherung des Hybridverbinders 100 am Gegenverbinder 200 erzielt oder eine Kontaktkraft aufbringt.

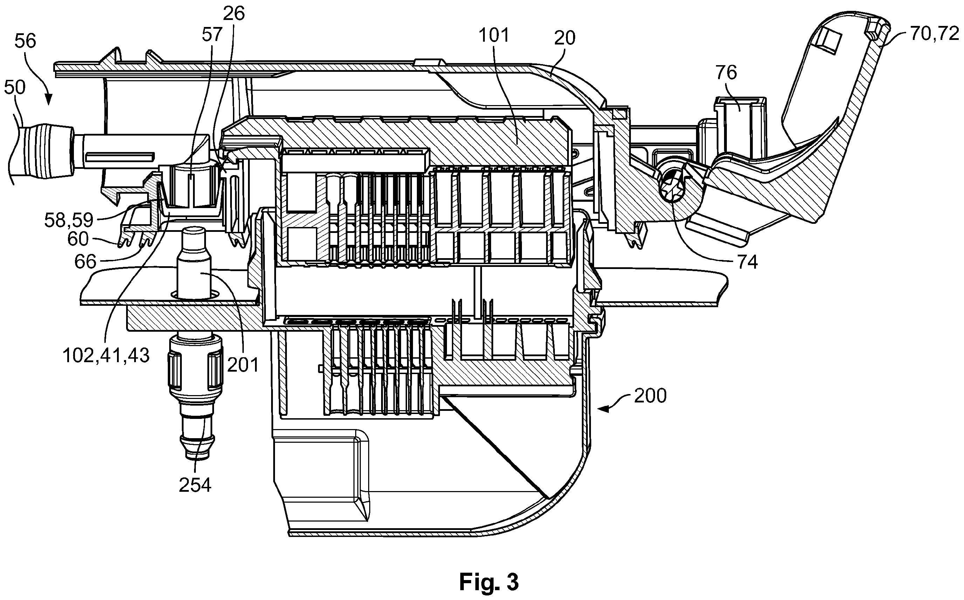

In anderen Ausgestaltungen können auch andere Sicherungsmechanismen vorliegen, beispielsweise ein Mechanismus mit einem Hebel 72 (wie in Fig. 3 zu sehen ist). Der Hebel 72 ist in dieser Ausgestaltung komplementär zum Gehäuseteil 20 geformt und weist ein Scharnier 74 auf, mit dem der Hebel 72 um die zweite Querrichtung Q2 auf das Gehäuseteil 20 zubewegt werden kann und den Hybridverbinder 100 mit einem Sicherungselement 76 sichert, indem das Sicherungselement 76 durch den Hebel 72 in das Gehäuseteil 20 in Richtung der ersten Querrichtung Q1 eingeschoben wird.

Der Hybridverbinder 100 ist dazu ausgestaltet, mit dem am Blech 50 befestigten Gegenverbinder 200 verbunden zu werden. Das Blech 150, insbesondere seine Oberfläche 151, stellt dabei eine ebene Fläche 152 bereit, an der der Hybridverbinder 100 angebracht wird. Die Oberfläche 151 des Blechs 150 verläuft dabei parallel zu der ersten Querrichtung Q1 und der zweiten Querrichtung Q2. Um hiermit gut dichtend verbunden zu werden, liegt eine äußere Fläche der Dichtung 60 sowie der Dichtung 66 in einer Ebene, die senkrecht zur Ebene E, die die beiden Halbräume H1, H2 trennt, verläuft. Die Anschlussrichtung A ist parallel zur durch die Oberfläche 151 gebildeten Ebene.

Zur Fixierung am Blech 150 kann der Gegenverbinder 200 in einer vorteilhaften Ausgestaltung Rastelemente 202 aufweisen, die vom Gegenverbinder 200 in Querrichtung Q2 abstehen und flexibel einlenkbar sind, um eine Verrastung mit dem Blech 150 nach Einstecken des Gegenverbinders 200 in die Öffnung 154 ermöglichen. Das Blech 150 kann weiterhin Öffnungen 156 aufweisen, um die entsprechenden Kontaktelemente 201 des Gegenverbinders 200 aufzunehmen.

### Bezugszeichen

- 20: Gehäuseteil
- 21: Elektroverbindungsbereich
- 23: Kontaktfeld
- 24: Fluidverbindungsbereich
- 25: Kragen
- 26: Vorsprung
- 29: Tüllenbefestigungsabschnitt
- 31: proximales Ende
- 39: distales Ende
- 40: Fluidkanal
- 41: interner Anschluss
- 42: Trichter
- 43: Endabschnitt
- 44: erstes Segment
- 45: Ecke
- 46: zweites Segment
- 47: Steckelement
- 49: externer Anschluss
- 50: Fluidschlauch
- 52: Buchse
- 54: Durchmesser der Buchse
- 56: separates Teil
- 57: Materialbrücke
- 58: Rastelement
- 59: Rastarm
- 60: Dichtung
- 61: Abschnitt Dichtung
- 62: Abschnitt Dichtung
- 63: Dichtung
- 64: O-Ring
- 66: Dichtung
- 70: Schieber
- 72: Hebel
- 74: Scharnier
- 76: Sicherungselement
- 90: Tülle
- 91: Balg
- 100: Hybridverbinder
- 101: Stecker
- 102: Kontaktelement
- 150: Blech
- 151: Oberfläche
- 152: Fläche
- 154: Öffnung
- 156: Öffnung
- 200: Gegenverbinder
- 201: Kontaktelement
- 202: Rastelement
- 240: Fluidkanal
- 241: interner Anschluss
- 242: Vorsprung
- 247: Buchse
- 248: Steckelement
- 250: Trichter
- 252: Kupplungselement
- 254: Kupplung
- 300: Tür
- A: Anschlussrichtung
- E: Ebene
- H1: erster Halbraum
- H2: zweiter Halbraum
- Q1: erste Querrichtung
- Q2: zweite Querrichtung
- S: Steckrichtung
- V: Verbindungsrichtung

## Patentansprüche

1. Gehäuseteil (20) für einen Hybridverbinder (100) zur Übertragung von elektrischem Strom und mindestens einem Fluid auf einen Gegenverbinder (200) entlang einer Verbindungsrichtung (V), umfassend einen Elektroverbindungsbereich (21) und einen vom Elektroverbindungsbereich (21) getrennten Fluidverbindungsbereich (24), der einen an einem distalen Ende (39) gelegenen externen Anschluss (49) mit wenigstens einem Fluidkanal (40) zum Anschließen wenigstens eines Fluidschlauchs (50) quer zur Verbindungsrichtung (V) aufweist.

2. Gehäuseteil (20) nach Anspruch 1, wobei im verbundenen Zustand der Elektroverbindungsbereich (21) fluiddicht abgedichtet ist.

3. Gehäuseteil (20) nach Anspruch 1 oder 2, wobei ein Kragen (25) ein Kontaktfeld (23) des Hybridverbinders (100) umgibt.

4. Gehäuseteil (20) nach einem der Ansprüche 1 bis 3, wobei der wenigstens eine Fluidkanal (40) jeweils zwei Segmente (44, 46) mit zylindrischen Innenformen umfasst.

5. Gehäuseteil (20) nach einem der Ansprüche 1 bis 4, wobei der wenigstens eine Fluidkanal (40) als ein am Hybridverbinder (100) montiertes separates Teil (56) ausgestaltet ist.

6. Gehäuseteil (20) nach einem der Ansprüche 1 bis 5, wobei ein an einem proximalen Ende (31) gelegener interner Anschluss (41) des wenigstens einen Fluidkanals (49) zur Verbindung parallel zur Verbindungsrichtung (V) ausgestaltet ist.

7. Gehäuseteil (20) nach Anspruch 6, wobei der interne Anschluss (41) eine separate Dichtung (63) aufweist.

8. Gehäuseteil (20) nach einem der Ansprüche 1 bis 7, wobei sich der innere lichte Querschnitt des wenigstens einen Fluidkanals (40) in einem Endabschnitt (43) zu einem bzw. dem proximalen Ende (31) hin erweitert.

9. Gehäuseteil (20) nach einem der Ansprüche 1 bis 8, wobei das Gehäuseteil (20) einen Tüllenbefestigungsabschnitt (29) zur Befestigung einer Tülle (90) aufweist.

10. Gehäuseteil (20) nach einem der Ansprüche 1 bis 9, wobei das Gehäuseteil (20) dazu ausgestaltet ist, dass im vorgesehenem Betriebszustand der Fluidverbindungsbereich (24) bezüglich der Schwerkraft komplett unterhalb des Elektroverbindungsbereichs (21) liegt.

11. Gehäuseteil (20) nach einem der Ansprüche 1 bis 10, wobei der Fluidverbindungsbereich (24) komplett in einem ersten, von einer Ebene (E) definierten Halbraum (H1) liegt und der Elektroverbindungsbereich (21) komplett in einem zweiten, zum ersten Halbraum (H1) komplementären Halbraum (H2) liegt.

12. Hybridverbinder (100), umfassend ein Gehäuseteil (20) nach einem der Ansprüche 1 bis 11.

13. Hybridverbinder (100) nach Anspruch 12, wobei der Hybridverbinder (100) als ein Stecker (101) ausgestaltet ist.

14. Hybridverbinder (100) nach Anspruch 12 oder 13, wobei der Hybridverbinder (100) dazu ausgestaltet ist, dass die Verbindung des internen Anschlusses (41) mit einem Gegenelement im verbundenen Zustand durch wenigstens zwei voneinander unabhängige Dichtungen (60, 63) gegenüber dem Elektroverbindungsbereich (21) abgedichtet ist.

15. Hybridverbinder (100) nach einem der Ansprüche 12 bis 14, wobei der Hybridverbinder (100) dazu ausgestaltet ist, mit einem an einer Fläche (152) angebrachten Gegenverbinder (200) verbunden zu werden.
